# EUROPEAN PATENT APPLICATION

(11) **EP 1 056 223 A1**
(43) Date of publication of application: **29.11.2000**
(21) Application number: 99304038.5
(22) Date of filing: 25.05.1999
(51) Int. Cl.: H04B 7/185

(54) **Satellite communications system with mutually exclusive groups of users**

(71) Applicant: ICO Services Ltd., London W6 9BN (GB)
(72) Inventor: Lu, Sze-Ching, Sutton, Surrey SM1 2TJ (GB)
(74) Representative: Read, Matthew Charles

(57) **Abstract**

In a satellite communications system, where normal telephone and related traffic is handled, an additional PMR (Private Mobile Radio) facility is overlaid using "walkie-talkie" type handsets 55, for communication between a dispatcher 46 and various remote units 48 50, together with levels of communication including group 114, subgroup 120, multiple subgroup 122 and even one-to-one communication between handsets The handsets have a unit identity UID and a group identity GID employ a standard GSM SIM card. The UID and GID, together with spot beam 30 location (in whatever satellite 10 array of spot beams 30)are stored in mobile reference table 76 so that access is instant and seamless.

## Description

The present invention relates to satellite communications systems where a plurality of user terminals are operative to communicate with an earth station, by exchanging signals with one or more orbiting satellites, also in bi-directional communication with the satellite(s) to communicate either with other user terminals or with terrestrial telephones such as ground-based telephones or telephones linked to the public switched telephone networks. In particular, the present invention relates to such a system where inter-user terminal communications can be simplified and improved.

It is known, in the art, to provide a system where user terminals ( similar to a cellular telephone handset) can communicate with an earth station, via a satellite, to provide voice communications with other user terminals or with other telephones on other types of network, the additional element being provided by connections between the earth station and the other networks. This allows normal telephone calls to proceed, as is well known with regard to terrestrial cellular phone systems such as GSM or AMPS.

While satellite communications systems are adept at providing such standardised telephone handset to telephone handset communications, there exists a range of commonly used voice communications which are, substantially, outside of the provision of such systems. In the standard system, a subscriber dials a number, and, after ringing and destination handset activation, the voice communication can proceed. By contrast, in the world of "PMR" (private mobile radio) there is no dialling and access to the voice message recipient is instantaneous.

PMR is, commonly, used for a base station (the dispatcher) to maintain contact with a number of remote or mobile units. A typical example of such a use is where a taxi company uses its office to communicate with each of the mobile units (taxis) to monitor the reported position and business situation of each mobile. Equally, a trucking company will use PMR to keep track of its trucks, their positions and their delivery or pickup situation. In each instance, the unit at the base station and each unit in the mobiles is more akin to a "walkie talkie" than to a cellular telephone handset. Whereas the standard cellular telephone handset initiates and receives individual calls, based on number dialling and number identification on call receipt, PMR systems use a "push to talk" (PTT) system where the individual mobile (remote) user is able, always, to hear a voice message from a base station and vice versa and where the individual user simply pushes a button (the PTT button) to be able to talk to the base station.

Presently, such PMR systems are based on a high power base station, relatively high powered mobile (remote) units, and the possibility of one or more altitudinous relay stations so that contact can be maintained over an area. Such systems are wasteful of transmission power (especially from a mobile unit) since communication must be maintained right to the limit of the coverage area. This also opens a big possibility for radio interference, because of high power levels. The present invention seeks to provide a PMR system where all stations (base or mobile) require only modest power levels.

The present invention seeks to provide a means for integrating a PMR system within the structure of a satellite communications system where cellular telephone type user terminals are still able to conduct normal calls, and without compromise to either the normal cellular telephone type communications or to the PMR system.

PMR systems are, generally, limited to a small area, some hundreds of square kilometres, where the regional radio coverage is available. Extending the range involves complex use of parallel systems and resources. The present invention seeks to provide a PMR system where global (world-wide) coverage is providable without the complexity of using parallel resources and without any perceptible change to the function of either the base station or to the remote (mobile) terminals.

According to a first aspect, the present invention consists in a satellite communications system wherein a plurality of user terminals are operative to communicate with other user terminals by passing signals to and receiving signals from an earth station via at least one satellite, said system being characterised by: said plurality of user terminals comprising a plurality of units, said plurality of units comprising at least one mutually exclusive group of units, the or each mutually exclusive group comprising a plurality of units, and each unit in a mutually exclusive group being limited to communication with at least one other unit within the same mutually exclusive group.

According to a second aspect, the present invention consists in an operating method for a satellite communications system wherein a plurality of user terminals are operative to communicate with other user terminals by passing signals to and receiving signals from an earth station via at least one satellite, said method including the steps of: including a plurality of units among said plurality of user terminals, dividing said plurality of units comprise at least one mutually exclusive group of units, the or each mutually exclusive group comprising a plurality of units, and limiting each unit in a mutually exclusive group to communication with at least one other unit within the same mutually exclusive group.

The invention further provides a system and method wherein each unit comprises a group identifier, wherein the group identifier is associated with traffic from said each unit, and wherein each unit, when monitoring traffic, is operative to reject traffic not having a recognised group identifier.

The invention further presents an system and wherein each unit comprises an individual identifier, wherein each unit is operative to associate with traffic the individual identifier of that unit or those units towards which the traffic is directed, and wherein each unit, when receiving, is operative to reject any traffic not having a recognised individual identifier.

The invention further provides a system and method wherein at least some of the units, in a group, each comprises one or more subgroup identifiers, at least one unit being operative to associate a subgroup addressing code and one or more subgroup identifiers with a traffic transmission, and each unit being operative, when a subgroup is being addressed, to reject any traffic not having a recognised subgroup identifier.

The invention further provides a system and method wherein the satellite is operative to provide a plurality of spot beams on the surface of the earth, wherein the earth station is operative to allocate to each unit a receiving frequency and a transmission frequency within each spot beam where said each unit is located, and wherein the earth station comprises a unit reference table indicating the particular spot beam occupied by each unit, the frequencies allocated to each unit, and the group identifier of each unit, said earth station directing traffic from an originating unit only to those units having an identical group identifier to that of the originating unit.

The invention further provides a system and method wherein the unit reference table also stores the individual identifier of each unit, and wherein the earth station directs traffic only to those units which match the group identifier of the originating unit and the individual identifier associated with the traffic by the originating unit.

The invention further provides a system and method wherein the unit reference table also store the one or more subgroup identifiers of each unit, the earth station denying direction of traffic, when the subgroup addressing code is present in traffic, to any unit where no subgroup identifier matches any subgroup identifier in the traffic.

The invention further provides a system and method wherein said each unit is operative to register with said earth station in the same manner as a standard user terminal, the earth station recognising a unit on registration, capturing the details of each unit in a home location register and a visitor location register, and assembling the contents of the unit reference table from the contents of the visitor location register and the contents of the home location register.

The invention further provides a system and method wherein each unit, on registration, can indicate to the earth station, its nature as a unit, or where the earth station can detect that it is in process of registering a unit by examining the equipment identifier of the unit or user terminal which is in the course of registration, or where the earth station can detect that it is in process of registering a unit by previously having recording all unique identifiers from SIM cards in either user terminals or units that are eligible to register on the system and, thereafter, during the course of registration, detecting whether or not the unique identification of a SIM card of the unit or user terminal which is in the course of registration is that of a unit.

The invention further provides a system and method, suitable for use in a TDMA GSM system, wherein each item of traffic has said group identifier appended to the normal contents of a TDMA timeslot, each unit, when monitoring traffic, being operative to decode the appended group identifier.

The invention further provides a system and method wherein each item of traffic has the individual identifier appended to the normal contents of the TDMA timeslot, and wherein, each unit, when monitoring traffic, is operative to decode the appended individual identifier.

The invention further provides a system and method wherein, when an item of traffic is directed towards a subgroup, the one or more subgroup identifiers and a subgroup addressing code is appended to the normal contents of the TDMA timeslot, and wherein, each unit, when monitoring traffic, is operative to decode the one or more subgroup identifiers and the subgroup addressing code.

The invention further provides a system and method wherein the earth station activates a traffic target unit to receive traffic by means of a broadcast channel in the spot beam wherein the traffic target unit is situated, or by means of an associated data and command channel in the spot beam wherein the traffic target unit is located.

The invention is further explained, by way of example, by the following description, in conjunction with the appended drawings, in which:
Figure 1 shows a constellation of communications satellites in orbit about the earth.
Figure 2 shows a pair of constellations in orthogonal orbits.
Figure 3 shows the provision of spot beams on the surface of the earth in the radio coverage of each satellite.
Figure 4 shows the communications environment wherein the invention is embodied.
Figure 5 shows a typical "unit" as provided in the embodiment of the invention.
Figure 6 shows a flowchart of the activities of the unit of figures 4 and 5, and of the earth station, when registering a unit on the system.
Figure 7 shows how the earth station identifies that it is, indeed, a unit that is attempting to register.
Figure 8 shows how the earth station keeps track of units.
Figure 9 shows the structure of TDMA timeslots and how one embodiment of the invention exploits that structure.
Figure 10 is a flowchart of the activities of a unit when exploiting the TDMA structure shown in figure 9.
Figure 11 is a flowchart of a method, which can be used by the earth station, to minimise power, traffic and spectrum requirements.
Figure 12 is a conceptualised diagram showing the membership of unit groups and subgroups.
   and
Figure 13 is a flowchart of the activities of the earth station when practising an alternative form of the invention which does not exploit the modification to the TDMA timeslots, otherwise shown in figure 9.

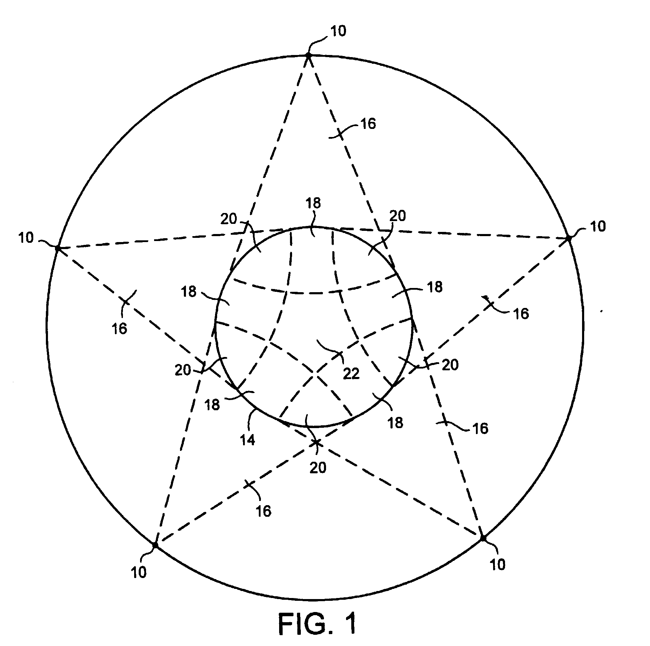

Figure 1 shows a planar constellation of satellites disposed about the earth and is illustrative of the type of radio satellite communications system wherein the preferred embodiment of the present invention is applied..

The plurality of satellites 10 are evenly disposed around a circular orbit 12 above the surface of the earth 14. Each of the satellites 10 is designed to provide radio communications with apparatus on the surface to the earth 14 when the individual satellite 10 is more than 10 degrees above the horizon. Each satellite 10 therefore provides a cone 16 of radio coverage which intersects with the surface of the earth 14.

The surface of the earth has three types of areas. A first type of area 18 is one which has radio coverage from only one satellite 10. A second type of area 20 is an area where there is radio coverage from more than one satellite 10. Finally, a third type of area 22 receives radio coverage from none of the satellites 10 in the orbit 12 shown.

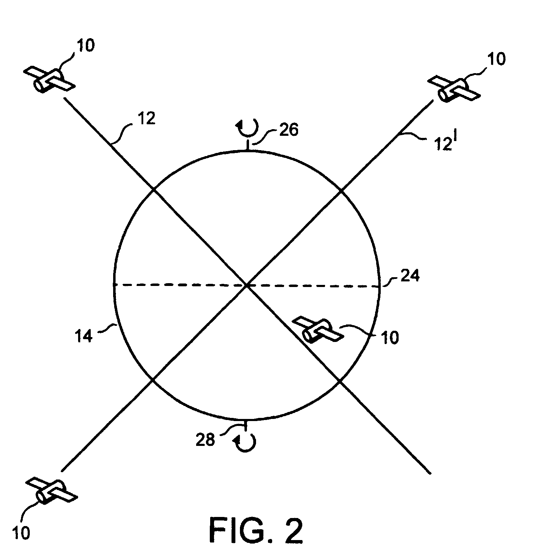

Figure 2 illustrates how the satellites 10 are disposed in orthogonal orbital planes.

The first orbit 12 of figure 1 is supplemented by a second orbit 12' having satellites 10 disposed there about in a similar manner to that shown in figure 1. The orbits 12' are orthogonal to one another, each being inclined at 45 degrees to the equator 24 and having planes which are orthogonal (at 90 degrees ) to each other.

In the example shown, the satellites 10 orbit above the surface of the earth 14 at an altitude of 10 500km. Those skilled in the art will be aware that other orbital heights and numbers of satellites 10 may be used in each orbit 12, 12'. This configuration is preferred because the example provides global radio coverage of the earth 14, even to the north 26 and south 28 poles, with a minimum number of satellites 10. In particular, the orthogonality of the orbits ensures that the satellites 10 of the second orbit 12' provides radio coverage for the third types of area 22 of no radio coverage for the satellites in the first orbit 12, and the satellites 10 in the first orbit 12 provide radio coverage for those areas 22 of the third type where the satellites 10 of the second orbit 12' provide no radio coverage.

It will become clear that, although the two orbits 12, 12' are here shown to be of the same radius, the invention as hereinbefore and hereinafter described will function with orbits 12, 12' of different radii. Equally, there may be more than two orbits 12, 12'. So far as the present invention is concerned, the only requirement is that every part of the surface of the earth 14 is in receipt of radio coverage from at least one satellite 10 at all times.

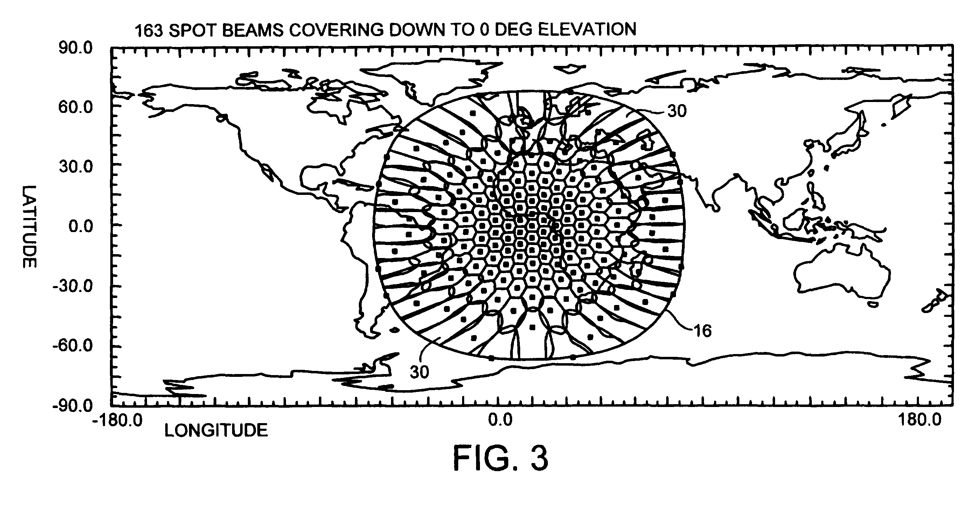

Figure 3 shows the structure of the cone 16 of radio coverage provided by each satellite 10. For convenience, the radio coverage cone 16 is shown centred, on a map of the earth, at latitude 0 degrees at longitude 0 degrees. The cone 16 of radio coverage is divided into a plurality of spot beams 30, by means of a corresponding plurality of directional antennae on the satellite 10. The satellite 10 is intended for mobile radio telephone communications and each of the spot beams 30 corresponds, roughly, to the equivalent of a cell in a cellular radio telephone network. In figure 3, the cone of radio coverage 16 is distorted due to the geometry of the map of the earth's surface provided. Figure 3 also shows the extent of interaction of the cone 16 of radio coverage down to the edges of the cone 16 being tangential to the earth's surface, that is, to the point where the cone 16 represents a horizontal incidence at its edges, with the surface of the earth. By contrast, figure 1 shows the cone 16 at a minimum of 10 degrees elevation to the surface of the earth.

It is to be observed, that because of the curvature of the earth, the spot beams 30 are of near uniform, slightly overlapping circular shape at the centre whereas, at the edges, the oblique incidences of the spot beams 30 onto the surface of the earth 14 causes considerable distortion of shape.

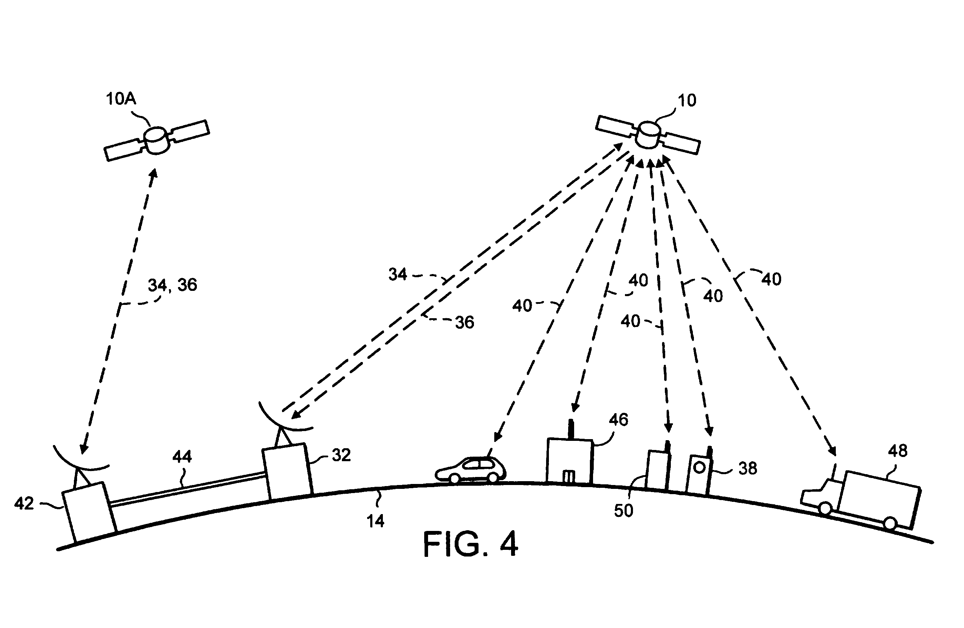

Figure 4 shows he communications environment wherein the embodiment of the present invention functions.

A first satellite 10, in orbit about the earth 14, is in bi-directional communication with a first earth station 32 by means of a microwave uplink 34 on a first frequency, and a microwave downlink 36 on a second frequency. In turn, the first satellite 10 provides bi-directional exchange of control and voice signals with a plurality of user terminals (only one being shown for clarity) by means of user terminal uplink and downlink radio signals 40 on a third band of frequencies, being within respective spot beams 30 and shown, for convenience, as a single entity 40.

The primary purpose of the elements (10, 38 32) of figure 4 is to provide what is equivalent to cellular telephone coverage to provide telephone traffic directed to, or originating from, any of the plurality of user terminals 38. Such services are typified by the IRIDIUM™ and ICO™ systems. The first earth station 32 is connected to a second earth station 42 by means of a terrestrial connection 44 which may be in bi-directional contact 34 36 with a second satellite 10A. The second satellite 10A covers its own respective portion of the surface of the earth. Around the earth, there are provided a plurality of interconnected earth stations 36 42, some or all of which are connected to the terrestrial telephone network so that communications can be made between the terrestrial telephone network and the user terminals 38 via a plurality of satellites 10 10A. The user terminals 38 are very similar to a cellular telephone handset and comprise, in general, a display, a dialling keypad, and a plurality of control buttons. In use, to receive a call, the user simply activates the user terminal, as is well known. To make a call, the user must dial the number of a target telephone (which could be of any kind, perhaps a cellular telephone, or a satellite user terminal 38 on this or another system, or a standard PSTN subscriber terminal, anywhere in the word) to establish one to one contact. This is also well known.

Handset to handset, or user terminal to user terminal, or user terminal to handset communications, on a one to one basis, are well known. By contrast, "PMR" type communications, within such satellite a network, pose a problem in that a PMR system requires instant and direct access without intervening set-up procedures, and must not interfere with, or be incompatible with, the main business of such a satellite network, which is to provide individually-dialled calls. Further, in order to provide PMR type communications, the satellite network must not dedicate an excess of resources, to the detriment of normal service. The user terminal 38, used in the satellite communications network, for economic reasons, should not be expensively modified for provision of a PMR type service. The minimally modified user terminal should meet all of the expectations of a PMR user without introducing unacceptable complexity. Problems in PMR, such as high base station power requirements to provide a large area of initial coverage, should be overcome. The present invention seeks to provide a means for meeting PMR communications requirements, within the scope of the normal directed telephone call environment of a satellite communications network, at the same time meeting the restrictions that such an environment imposes.

Returning to figure 4, various PMR entities are represented. A PMR base station 46, possibly at the main building of an organisation, a delivery truck 48, a mobile vehicle 50, such as a taxi, or a handheld unit 52, are all in potential communication with the first base station 32, within the limitations of PMR operation, and potentially able to exchange PMR type communications with each other, or with PMR units within coverage of the second (in effect, any other) satellite 10A.

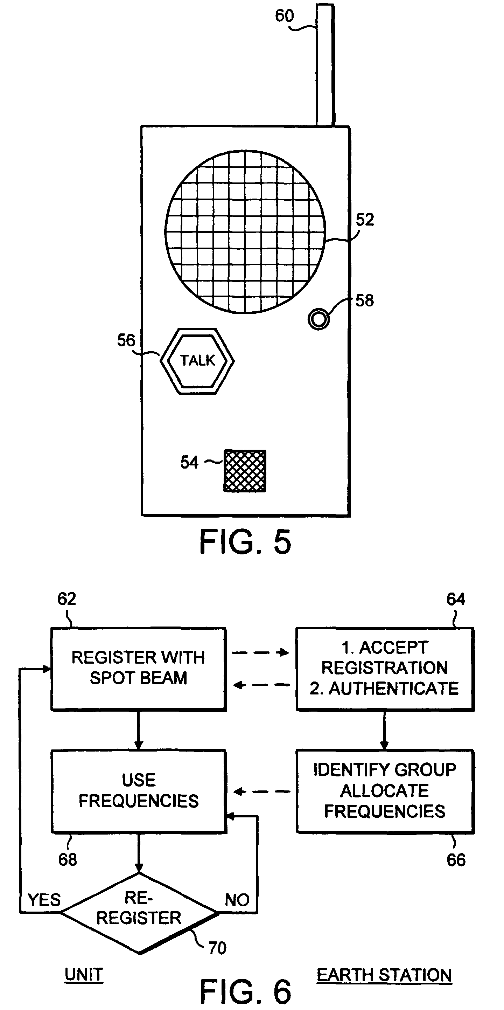

Figure 5 is a view of a generic "mobile unit" 50, such as can be employed in the embodiment of the invention.

The mobile unit 50 is a much simplified user terminal 38. The mobile unit 50 comprises a loudspeaker 52, a microphone 54, a talk button 56, a busy light 58, and an antenna 60. The usual keyboard, display and other function buttons are all missing. The mobile unit simply directs all incoming messages to the loudspeaker 52, If the user wishes to respond, simply pressing the talk button 56 allows voice from the microphone 54 to be transmitted to a selected (or a group of selected) destinations. If, as will later be explained, at the moment of response a channel is not available, the busy light 58 is illuminated and the user knows to try again. The interior of the mobile unit 50 is simply a user terminal with many of its functions unused. The design of the mobile unit 50 thus does not require a costly overhead as it is, essentially, already designed for the standard user terminal 38 and benefits from economy of manufacturing numbers. It also allows the use of a standard SIM card, whose functionality will later be explained.

Figure 5 illustrates the handheld version of a mobile unit. When used in a vehicle, the unit 50 can be configured as a dashboard mounted item. An identical unit can be used as the base station 46 source. The antenna 60 can be externally mounted on a building or vehicle. An earphone can replace the loudspeaker 52. A remote microphone can replace the microphone 54, in which case the microphone can incorporate a push-to-talk (PTT) switch to replace the function of the talk button 56 so that whole thing functions much in the manner of a CB radio. The variations are many.

Because all of the mobile and base station 46 units 50 are modelled around an existing user terminal 38 design where power levels are very low (typically less than 1 watt and peaking at a mere 3 watts), the heavy power requirement found in normal PMR systems is eliminated. The present invention offers up to global coverage for a level of power which, in ordinary PMR systems, would have been deemed inadequate even for coverage of a few kilometres.

The plurality of units 50 are divided into groups. Each group represents a closed set of units 50 which are able to communicate within the particular group to which they are allocated but are unable to communicate with any unit in any other group. This mirrors the ideal situation for standard PMR. Each group has a group identifier (GID). Within each group, the units 50 are allocated an individual identifier (IID). As will later become clear, some or all of units 50 can share the same IID, or all the units can have a different IID, dependently upon the elected style of operation the satellite PMR system.

The spot beams 30 on the satellites each comprise a plurality of traffic channels (TCH) normally allocated for voice traffic in the normal manner of operation of a cellular satellite telephone system. In the present invention, if PMR traffic is being handled by a spot beam 30, selected channels on selected frequencies are reserved for the PMR traffic. In general, a unit 50, being a member of a particular group, will be allocated a talk frequency and a listen frequency within its own spot beam 30.

Now, PMR traffic is, by nature, very sporadic. One has only to eavesdrop on a terrestrial PMR system to realise that silence predominates. It is therefore desirable, in the interests of spectral efficiency, to re-use the same frequencies for more than one group. Accordingly, in the present invention, it is an option for members of more than one group to be allocated the same talk frequency and the same listen frequency. The invention, as will later become clear, provides that, despite sharing the same frequencies, members of different groups are prevented from overhearing each others traffic.

The preferred embodiment resides in the ICO™ system, which is a modified GSM system employing TDMA (as is well known in relation to the GSM system). The present invention also provides separation between groups on the same frequencies by allocation of separate send and receive TDMA timeslots. In this way, either greater security between groups, or more groups on the same frequencies, are obtained.

Figure 6 shows the registration (logging-on) process from the point of view of both the earth station 32 (right hand stream) and of the unit 50 (left hand stream).

The process of registration is substantially identical to the process employed for a standard user terminal 38. The manner and causes of such registration are described in EPA (list of ICO published patents) briefly, to summarise, the unit 50 pages the earth station 32 through the satellite 10 and a process of exchange and verification takes place between the earth station 32 and the unit 50. The activities of the unit 50 are exemplified by the first operation 62 and the corresponding, mutually handshaking activities of the earth station 32 are exemplified by a second operation 64.

The first 62 and second 64 operations have the IMSI (international mobile subscriber identifier) on the SIM card in the unit 50 transferred to the earth station 32 which employs an authentication centre to verify the veracity and acceptability of the SIM card, thereby preventing fraudulent or unrecognised use. If the SIM card passes authentication, the earth station 32 transfers to a third operation 66 where it identifies whether or not the registration attempt comes from a unit 50 as opposed to a user terminal 38, and, if the proffered registration is from a unit 50, identifies to which group that unit 50 belongs. Knowing the group, the earth station 32 tells the unit 50 the frequencies it has been allocated in the particular spot beam the unit 50 finds itself. The unit, then, in a fourth operation 68 uses those frequencies for PMR functioning until a first test 70 determines that re-registration is required, at which point the whole process of figure 6 repeats itself. As is known in the art, reregistration can be triggered on an elapsed time basis, because of loss of signal strength at the unit 50, when swapping spot beams 30 as coverage is lost due to the movement of the satellite 10, or when swapping from satellite 10 to satellite 10A. Those, skilled in the art, will be aware of still further criteria that the first test 70 can employ.

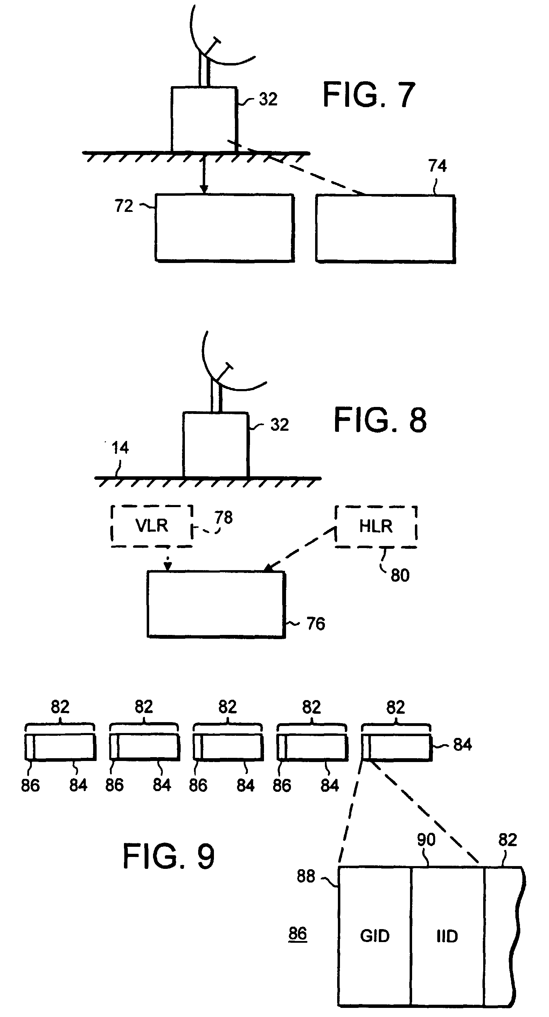

Returning to the first 62 second 64 and third 66 operations, the unit 50 will be allocated to a group. Identifying the group can be done in several ways, illustrated in figure 7. The earth station 32 can have, associated therewith, an IMSI lookup table 74 where, if a match is found between the IMSI on the SIM card from the unit 50 and a record of tat IMSI being for a mobile unit 50, a corresponding stored GID and IID are recovered for tat particular unit 50.

Equally, it is known for the exchange between the earth station 32 and the unit 50/user terminal 38 to include an equipment type identifier which is sent to the earth station 32 so that differences in performance can be accommodated. If a match is found between the equipment type and a known unit 50 (as opposed to a user terminal 38) in a type identifier lookup table 74, ten the earth station 32 knows that it is dealing with a unit 50.

The method described with reference to figure 7 allows the unit 50 to register without being required to provide any extra information that an ordinary user terminal 38 would be required to give. The operation is therefore "seamless".

The present invention also allows for an alternative to that shown in figure 7. The alternative permits that the unit 50. Having its group identity (GID) permanently stored therein, together with its individual identity (IID) and a "unit identifier" (UID) to identify it as a unit as opposed to a simple user terminal 38, transmits the UID, GID and IID to the earth station 32 which is thereby alerted to take appropriate action. The measures of figure 7, and the alternative above described, can be used, each in whole or in part. All that is necessary is that the earth station 32 knows the nature of the unit 50, in some alternatives its IID, and its GID.

Once the unit 50 is identified as such, and its GID and IID are known, the earth station(s) 32 42 enter the data of the individual unit 50 into a mobile unit reference table 76 where the IID, GID, spot beam 30 occupied and frequencies in use for that group are stored. Where a unit 50 is visible to satellites 10 10A accessed by more than one earth station 32 42, data is transferred between earth stations 32 42 by a terrestrial connection 44. In this way, current data is held for all of the units 50 in all of the groups at each earth station 32 42 which has reason to interact with the units in a particular group. The normal process of registration for a user terminal 38 is known, in the art, to result in entries in a visitor location register (VLR) 78 and a home location register (HLR) 80. It is an alternative embodiment of the present invention that the unit 50 related data can be stored in the VLR 78 and the HLR 80 and the contents of the mobile unit reference table 76 compiled therefrom.

As a result of the activities described with reference to figure 8, each earth station 32 42 which has reason to interact with a particular group has an instantly available table 76 which does not require access to any other source, thereby permitting more rapid access to units 50 when traffic is required. This arrangement is preferred, but the invention equally encompasses having one table 76 which is shared between the earth stations 32 42, in which instance an entry is required to identify the satellite 10 10A and the earth station 32 42. In any event, the present invention thereby provides up to global coverage for units 50 in any group.

Figure 9 shows how TDMA timeslots are used, in one preferred embodiment of the invention, to provide a PMR system where intervention by the earth station 32 42 and the network, on the surface of the earth 14, is kept to a minimum.

TDMA timeslots 82, as is well known to those skilled in the art, are an endless sequence of contiguous short time periods during which either a user terminal 38 (or unit 50) can transmit and the earth station 32 listens, or during which the earth station 32 transmits and user terminal 38 (or unit 50) listens. The content of a timeslot 82 comprises encoded voice data as a digital stream. Such a system is well known in GSM. The present invention provides the encoded voice data 84, together with the additional feature of a short data burst of PMR data 84, shown expanded to include a short data burst giving the GID (group identifier) 88 and another short data burst giving the IID (individual identifier) 90. The PMR data 84 is shown, for preference at the beginning of each timeslot 82, thus allowing the maximum amount of forewarning for subsequent activity or inactivity. It is to be understood that the present invention also encompasses that the GID burst 88 and the IID burst 90 need not be at the beginning of a timeslot 82, need not be together, and need not be in the order shown. It is simply necessary that the PMR data 86 is present and accessible.

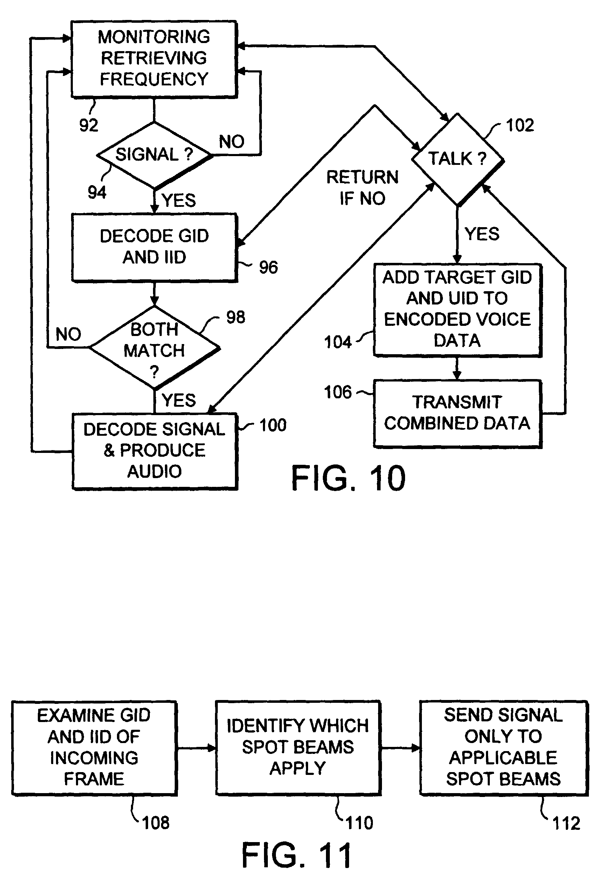

Figure 10 is a flowchart showing the activity of a unit 50 during listening and talking.

A fifth operation 92 has the unit 50 monitoring the receiving frequency about which it was told by the third operation 66 of figure 6 until a second test 94 detects a signal on that frequency. A sixth operation 96 then has the unit 50 decode the GID and the IID from the PMR data 86 shown in figure 9. A third test 98 then checks to see if the IID and the GID for the particular listening unit 50 match the unit's 50 own settings. If no match, or a partial mismatch, is found, control passes back to the fifth operation 92 and the unit 50 keeps listening without producing audio output. If a total match is found, indicating that the listening unit 50 is the or a destination for the traffic, control passes to a seventh operation 100 where the unit 50 decodes the encoded voice data 84 of the timeslot 82 as shown in figure 9 and produces an audio output to be made available to the user of the unit 50.

If, at any time, a third test 102 detects that the user of the unit 50 wishes to talk, such as by the user pushing the talk button 56 of figure 5, the unit 50 stops doing whatever it is currently doing (to resume the previous activity when the need to talk no longer exists) and control passes to an eighth operation 104 where the unit 50 encodes the voice signal from the microphone 54 and adds, as shown and explained with reference to figure 9, the PMR data 86, 88, 90 of the target unit(s) 50 to the encoded voice data 84 to be sent at the next available TDMA timeslot for the unit 50 to transmit to the earth station 32 via the satellite 10. A ninth operation 106 then has the unit 50 transmit its assemble timeslot content 82 (as shown in figure 9) and control passes back to the third test 102. The user can continue to talk as long as desired, the unit 50 then returning to the listening operations 92 - 100 from whence it exited to conduct talk mode.

In this manner, as exemplified by figures 9 and 10, the individual units 50 police and monitor their communications so that the earth station(s) 32 42 have minimal intervention, merely being required to relay the traffic generated by the units 50 on the appropriate frequencies and spot beams 30.

Figure 11 is a flowchart showing a further refinement whereby the earth station 32 42 can minimise its transmitted traffic.

A tenth operation 108 has the earth station 32 monitor the content of any timeslot 82 it receives on a PMR frequency and extract the PMR data 86. Whereas, in the present invention, full functionality of a PMR system would be achieved by the earth station 32 extracting only the GID data 88 to know within which spot beams 30 and on what frequencies the members of the whole group can be accessed, the refinement of the present invention, shown in figure 11, has the earth station 32 also extract the IID data 90. This allows an eleventh operation 110 to use the mobile unit reference table 76 of figure 8 to identify those spot beams 30 and frequencies at which a unit 50 or units 50 can be contacted which display a perfect and total match with the GID and the IID. A twelfth operation 112 then has the earth station 32 transmitting only on those frequencies and on those spot beams 30 where traffic is required. The entire group need not be contacted if a communication is only for a portion (subgroup) thereof, and the activities of figure 11 allow this, saving power and traffic levels at the satellite 10 and avoiding collisions and congestion of other frequencies, which may be shared by other groups and where no traffic is actually targeted, even though a unit 50 is a sending group may be present.

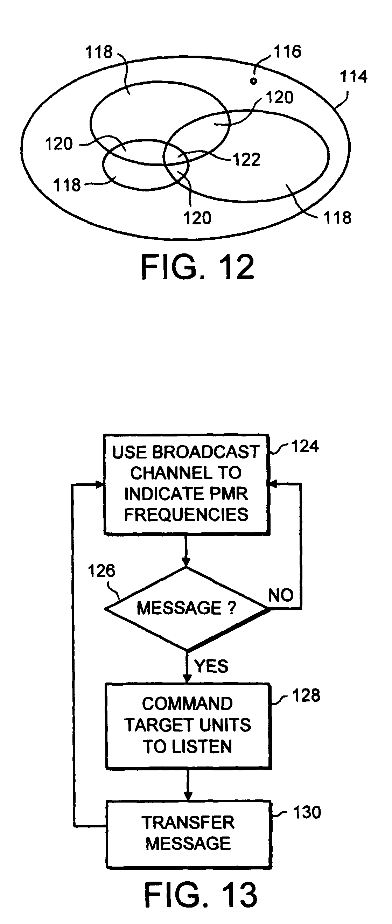

Figure 12 shows possible composition of a group. The group 114 can comprise a plurality of units 50. In the situation where free (open) group communication is required, much like the situation on a CB channel, each unit 50 being audible to each other unit 50, all of the units 50 in the group have the same IID which they append as the IID for transmission. Since the whole group 114 is included, a short or default IID is sufficient.

In another, common PMR configuration, base station unit 116 (dispatcher) may be required, where the base station 116 is audible to all other units 50 and all other units 50 can communicate only with the base station 116. In this instance, the base station 116 would have one IID and all other units 50 would have the same, identical IID. On transmission, the base station 116 would append the IID of all of the other units 50, and, on their transmission, each of the other units 50 would append the base station IID. In this instance, only two different IID's are required, and a simple one digit binary number (1 or 0) would be sufficient, and that IID would be singly available to each unit 50.

In the more complex, general situation, the group 114 can comprise one or more subgroups 118, each comprising preselected ones of the units 50 and together forming a portion of all of the units 50 in the group 114. Like a Venn Diagram, the subgroups 118 can overlap to provide units 50 which are doubly covered, triply covered 122, or more than triply covered. In order to accommodate one or more subgroups, which may overlap, a portion of the available characters of the IID data 90 is used, in the unit reference table 76, to identify to which subgroup 118 a unit 50 is attached. One of the available codes for IID is reserved for subgroup addressing. Thus, if the IID decodes as "subgroup # 3", each unit 50 recognises its subgroup 118 assignment and the subgroup addressor and decodes transmissions 84 if it is in the subgroup 118 addressed. In order to accommodate overlap 120 122, the IID of a unit 50 must indicate to which subgroups it belongs and the unit reference table 76 must accommodate this data. Traffic can then simultaneously be sent to more than one subgroup and all units 50 in overlaps will intercept the traffic. To achieve this, and all the operations hereinbefore described, it is preferred that the IID data 90 comprises:
1) A unique unit identity (IIDA)
2) A default unit identity (IIDB)
3) One or more subgroup identifiers (IIDC)
In addition, there exists a subgroup identifier code (SIC) which the unit 50 can decode, but which does not make up part of the identity IID 90 of a unit 50. Items 1, 2 and 3, immediately above, can be concatenated to provide the IID of a unit 50.

On IID decoding the IID and the GID, the sixth operation 96 and the third test 98 of figure 11 will deem a match to exist if:
a) IIDA matches
b) IIDB matches
c) The SIC is detected on one or more IIDC subgroup identifiers match.

Using this system, it is possible to subdivide a group 114 into smaller and smaller portions 116 until, ultimately, each unit 50 can individually address every other unit 50 in a group 114 effectively creating a private, half duplex telephone system, but with rapid access and limited to the number of units 50 in a group 114. Equally, any type of operation from full open CB type operation right down to every possibility of more complex subgroupings 118 can be achieved. The variety is limited only by the acceptable length of the IID data 90 that the skilled designer wishes to accommodate in the PMR data 86.

An alternative to sixth operation 96 of figure 10 and the third operation 66 of figure 6. is shown in figure 13. While figure 9 showed the PMR data 86 appended to a TDMA timeslot 82 , the present invention presents, as an alternative, that the TDMA timeslot is filled only with encoded voice data 84 ( as is found in normal TDMA GSM) and that the satellite 10 uses a broadcast channel (it is known to provide a broadcast channel (BCCH) in each spot beam 30). While it is possible to accommodate the invention within an existing BCCH, the invention also encompasses the provision of a dedicated PMR broadcast channel (PMRBCCH) in each spot beam 30. The units 50, like all user terminals 38, periodically listens to broadcasts (BCCH or, in the invention, PMRBCCH) wherefrom it obtains information and general instructions.

The invention encompasses a thirteenth operation 124 where the earth station 32 uses the BCCH or a PMR BCCH from the satellite 10 to inform, in general, all of the units 50 in a particular spot beam 30, which groups have which frequencies in that spot beam 30. This augments communication by the earth station 32 from the third operation 66 to the fourth operation 68 and takes it away from the registration/re-registration process. It also permits a unit 50, on entering a spot beam 30, to her traffic and talk, without and before registration, provided there is another unit 50 in the same spot beam and belonging to the same group 114.

If a fourth test 126 detects that PMR traffic is to be sent in that spot beam 30, the present invention also encompasses a fourteenth operation 128 where the earth station 32 uses the satellite 10 BCCH or PMRBCCH to warn all target units 50 to receive by sending the GID and the IID of those units which are addressed by the traffic. As an alternative, the earth station 32 can use a command channel, unique to each receiving frequency, to achieve the same object, though with the overhead of additional spectrum usage. This replaces the activity of the sixth operation 96 and the third test 98 of figure 10. A fifteenth operation 130 then has the earth station 32 send the traffic.

The present invention also encompasses the above measures, as described with reference to the figures, taken in all other combinations suitable to operate the invention as further explained in the following claims.

## Claims

1. A satellite communications system wherein a plurality of user terminals are operative to communicate with other user terminals by passing signals to and receiving signals from an earth station via at least one satellite, said system being characterised by: said plurality of user terminals comprising a plurality of units, said plurality of units comprising at least one mutually exclusive group of units, the or each mutually exclusive group comprising a plurality of units, and each unit in a mutually exclusive group being limited to communication with at least one other unit within the same mutually exclusive group.

2. A system, according to claim 1, wherein each unit comprises a group identifier, wherein the group identifier is associated with traffic from said each unit, and wherein each unit, when monitoring traffic, is operative to reject traffic not having a recognised group identifier.

3. A system, according to claim 2, wherein each unit comprises an individual identifier, wherein each unit is operative to associate with traffic the individual identifier of that unit or those units towards which the traffic is directed, and wherein each unit, when receiving, is operative to reject any traffic not having a recognised individual identifier.

4. A system, according to claim 2 or claim 3, wherein at least some of the units, in a group, each comprises one or more subgroup identifiers, at least one unit being operative to associate a subgroup addressing code and one or more subgroup identifiers with a traffic transmission, and each unit being operative, when a subgroup is being addressed, to reject any traffic not having a recognised subgroup identifier.

5. A system, according to claims 1, 2, 3 or 4, wherein said satellite is operative to provide a plurality of spot beams on the surface of the earth, wherein said earth station is operative to allocate to each unit a receiving frequency and a transmission frequency within each spot beam where said each unit is located, and wherein said earth station comprises a unit reference table indicating the particular spot beam occupied by said each unit, the frequencies allocated to said each unit, and the group identifier of said each unit, said earth station directing traffic from an originating unit only to those units having an identical group identifier to that of the originating unit.

6. A system, according to claim 5, wherein said unit reference table is further operative to store the individual identifier of said each unit, and wherein said earth station is operative to direct traffic only to those units which match the group identifier of the originating unit and the individual identifier associated with the traffic by said originating unit.

7. A system, according to claim 5 or claim 6, wherein said unit reference table is further operative to store said one or more subgroup identifiers of said each unit, said earth station being operative to deny direction of traffic, when said subgroup addressing code is present in traffic, to any unit where no subgroup identifier matches any subgroup identifier in the traffic.

8. A system according to claim 5, 6 or 7 wherein said each unit is operative to register with said earth station in the same manner as a standard user terminal, said earth station being operative to recognise a unit on registration, being operative to capture the details of said each unit in a home location register and a visitor location register, and being operative to assemble the contents of said unit reference table from the contents of said visitor location register and the contents of said home location register.

9. A system, according to claim 8, wherein said each unit, on registration, is operative to indicate to said earth station, its nature as a unit.

10. A system, according to claim 8, wherein said earth station is operative to detect that it is in process of registering a unit by examining the equipment identifier of the unit or user terminal which is in the course of registration.

11. A system, according to claim 8, wherein said earth station is operative to detect that it is in process of registering a unit by previously having recording all unique identifiers from SIM cards in either user terminals or units that are eligible to register on the system and, thereafter, during the course of registration, detecting whether or not the unique identification of a SIM card of the unit or user terminal which is in the course of registration is that of a unit.

12. A system, according to claim 2, or according to any of claims 4, to 10 when dependent upon claim 2, for use in a TDMA GSM system, wherein each item of traffic has said group identifier appended to the normal contents of a TDMA timeslot, each unit, when monitoring traffic, being operative to decode the appended group identifier.

13. A system, according to claim 12 when dependent upon claim 3, wherein each item of traffic has said individual identifier appended to said normal contents of said TDMA timeslot, and wherein, each unit, when monitoring traffic, is operative to decode the appended individual identifier.

14. A system, according to claim 13, dependent upon claim 4, wherein, when an item of traffic is directed towards a subgroup, said one or more subgroup identifiers and a subgroup addressing code is appended to said normal contents of said TDMA timeslot, and wherein, each unit, when monitoring traffic, is operative to decode said one or more subgroup identifiers and said subgroup addressing code.

15. A system, according to any of the previous claims, wherein said earth station is operative to activate a traffic target unit to receive traffic by means of a broadcast channel in the spot beam wherein the traffic target unit is situated..

16. A system, according to any of the claims 1 to 15, wherein said earth station is operative to activate a traffic target unit to receive traffic by means of an associated data and command channel in the spot beam wherein the traffic target unit is located.

17. An operating method for a satellite communications system wherein a plurality of user terminals are operative to communicate with other user terminals by passing signals to and receiving signals from an earth station via at least one satellite, said method including the steps of: including a plurality of units among said plurality of user terminals, dividing said plurality of units comprise at least one mutually exclusive group of units, the or each mutually exclusive group comprising a plurality of units, and limiting each unit in a mutually exclusive group to communication with at least one other unit within the same mutually exclusive group.

18. A method, according to claim 17, including the steps of: allocating to each unit a group identifier, associating the group identifier with traffic from said each unit, and causing each unit, when monitoring traffic, to reject traffic not having a recognised group identifier.

19. A method, according to claim 18, including the steps of allocating to each unit an individual identifier, causing each unit to associate with traffic the individual identifier of that unit or those units towards which the traffic is directed, and causing each unit, when receiving, to reject any traffic not having a recognised individual identifier.

20. A method, according to claim 18 or claim 19, including the steps of: allocating to at least some of the units, in a group, one or more subgroup identifiers, at least one unit being operative to associate a subgroup addressing code and one or more subgroup identifiers with a traffic transmission, and causing each unit, when a subgroup is being addressed, to reject any traffic not having a recognised subgroup identifier.

21. A method, according to claims 17, 18, 19 or 20, wherein said satellite is operative to provide a plurality of spot beams on the surface of the earth, including the steps of: said earth station allocating to each unit a receiving frequency and a transmission frequency within each spot beam where said each unit is located, providing said earth station with a unit reference table indicating the particular spot beam occupied by said each unit, the frequencies allocated to said each unit, and the group identifier of said each unit, and said earth station directing traffic from an originating unit only to those units having an identical group identifier to that of the originating unit.

22. A method, according to claim 21, including the steps of: causing said unit reference table to store the individual identifier of said each unit, and said earth station directing traffic only to those units which match the group identifier of the originating unit and the individual identifier associated with the traffic by said originating unit.

23. A method, according to claim 21 or claim 22, including the steps of: causing said unit reference table to store said one or more subgroup identifiers of said each unit, and said earth station denying direction of traffic, when said subgroup addressing code is present in traffic, to any unit where no subgroup identifier matches any subgroup identifier in the traffic.

24. A method according to claim 21, 22 or 23 wherein said each unit is operative to register with said earth station in the same manner as a standard user terminal, said method including the steps of: said earth station recognising a unit on registration, said earth station capture the details of said each unit in a home location register and a visitor location register, and said earth station assembling the contents of said unit reference table from the contents of said visitor location register and the contents of said home location register.

25. A method, according to claim 24, including the step of causing said each unit, on registration, to indicate to said earth station, its nature as a unit.

26. A method, according to claim 24, including the step of causing said earth station to detect that it is in process of registering a unit by examining the equipment identifier of the unit or user terminal which is in the course of registration.

27. A method, according to claim 24, including the steps of: said earth station detecting that it is in process of registering a unit by previously having recording all unique identifiers from SIM cards in either user terminals or units that are eligible to register on the system and, thereafter, during the course of registration, detecting whether or not the unique identification of a SIM card of the unit or user terminal which is in the course of registration is that of a unit.

28. A method, according to claim 18, or according to any of claims 20, to 26 when dependent upon claim 18, for use in a TDMA GSM system, including the steps of appending said group identifier to the normal contents of a TDMA timeslot, and each unit, when monitoring traffic, decoding the appended group identifier.

29. A method, according to claim 28 when dependent upon claim 19, including the steps of appending said individual identifier to said normal contents of said TDMA timeslot, and causing each unit, when monitoring traffic, is to decode the appended individual identifier.

30. A method, according to claim 29 when dependent upon claim 20, including the steps of: when an item of traffic is directed towards a subgroup, appending said one or more subgroup identifiers and a subgroup addressing code to said normal contents of said TDMA timeslot, and each unit, when monitoring traffic, decoding said one or more subgroup identifiers and said subgroup addressing code.

31. A method, according to any of claims 17 to 30, including the step of said earth station activating a traffic target unit to receive traffic by means of a broadcast channel in the spot beam wherein the traffic target unit is situated..

32. A method, according to any of the claims 17 to 30, including the step of said earth station activating a traffic target unit to receive traffic by means of an associated data and command channel in the spot beam wherein the traffic target unit is located.

33. A user terminal for a satellite mobile telecommunications system configured for use in an operating method as claimed in any of claims 17 to 32.

34. A user terminal according to claim 33 configured for PMR operation.
